# EUROPÄISCHE PATENTANMELDUNG

(11) **EP 1 613 131 A1**
(43) Veröffentlichungstag der Anmeldung: **04.01.2006**
(21) Anmeldenummer: 05009551.2
(22) Anmeldetag: 30.04.2005
(51) Int. Cl.: H05B 3/03, C03B 5/027

(54) **Elektrodensystem für Glas-Schmelzöfen**

(30) Priorität: 29.06.2004 DE 102004031242
(71) Anmelder: Beteiligungen Sorg GmbH & Co. KG, D-97816 Lohr am Main (DE)
(72) Erfinder: Rott, Lothar, 97816 Lohr am Main (DE)
(74) Vertreter: Zapfe, Hans

(57) **Zusammenfassung**

Ein Elektrodensystem für Glas-Schmelzöfen mit einer Schmelzwanne besitzt mindestens einen über dem Schmelzenspiegel (20) angeordneten Elektrodenhalter (9) für das Einführen von Heizelektroden (7) von oben durch den Schmelzenspiegel (20). Zwischen Elektrodenhalter (9) und Heizelektrode (7) ist je eine Kupplungseinrichtung (27) für die koaxiale, elektrische und Wasser führende Verbindung von Elektrodenhalter (9) und Heizelektrode (7) angeordnet, wobei der Elektrodenhalter (9) eine Kühlmittelführung (24) für ein Kühlmittel besitzt, die bis in die Heizelektrode (7) hineinreicht. Um dabei die Kompatibilität, Flexibilität sowie die Nach- und Umrüstbarkeit von Elektrodenhalter (9) und Heizelektrode (7) zu vereinfachen und kostengünstiger zu gestalten, ist erfindungsgemäss vorgesehen, dass
a) die Kupplungseinrichtung (27) eine erste tragfähige, lösbare Schraubverbindung (8a) mit einem koaxialen Aussengewinde (28a) für das Einschrauben in den Elektrodenhalter (9) und eine zweite tragfähige lösbare Schraubverbindung (8b) mit einem koaxialen Innengewinde (31) für das Einschrauben der Heizelektrode (7) aufweist, und dass
b) die Kühlmittelführung (24) aus einem Rohr und einem dieses umgebenden Ringspalt (26) besteht, die beide durch die Gewindeverbindungen (8a, 8b) und durch die Kupplungseinrichtung (27) hindurch geführt sind.

## Beschreibung

Die Erfindung betrifft ein Elektrodensystem für Glas-Schmelzöfen mit einer Schmelzwanne und mindestens einem über dem Schmelzenspiegel angeordneten Elektrodenhalter für das Einführen von Heizelektroden von oben durch den Schmelzenspiegel und mit je einer Kupplungseinrichtung für die koaxiale, elektrische und Wasser führende Verbindung von Elektrodenhalter und Heizelektrode, wobei der Elektrodenhalter eine Kühlmittelführung für ein Kühlmittel besitzt, die bis in die Heizelektrode hineinreicht.

Die Beheizung von Glasschmelzen in öfen kann bekanntermassen durch Heizelektroden erfolgen, die durch den Boden, durch die Seitenwände der Schmelzwanne oder von oben her durch die Ofendecke in die Schmelze eingeführt und ggf. gemäss ihres unvermeidbaren Verschleisses nachgeschoben werden. Ein Material, dass der Glasschmelze auf Dauer widersteht, ist bisher nicht bekannt.

Die Elektrodenführung durch den Boden und/oder durch die Seitenwände der Schmelzwanne ist wegen der Notwendigkeit eines Austauschs sowohl konstruktiv als auch betriebsmässig aufwändig, weil die dadurch frei werdenden öffnungen verschlossen werden müssen, um ein Auslaufen von Glasschmelze zu vermeiden. Die Tendenz geht daher in Richtung von oben zugeführter Heizelektroden, die auch als Tauchelektroden oder Top-Elektroden bezeichnet werden. üblicherweise sind die Elektroden und ihre Halter - ob gekühlt oder ungekühlt - über stromleitende Gewinde miteinander verbunden, die zum Elektrodenwechsel oder -nachschub lösbar bleiben müssen. Dabei gibt es eine Reihe von sich diametral entgegenstehenden Problemen. Bei ungekühlten Elektrodenverbindungen werden die Gewinde üblicherweise ausserhalb des Ofenraumes gehalten, was eine deutlich größere Länge der Elektroden oder Elektrodenabschnitte erforderlich macht.

Ein weiteres Problem besteht darin, daß die verwendeten Werkstoffe korrosionsanfällig sind, insbesondere im Bereich von auf der Glasschmelze betriebsbedingt schwimmendem Beschickungsgut und Glasgalle, die besonders aggressiv ist. Bis zur Drei-Phasen-Grenze an der Oberfläche der Glasschmelze kommt die oxidative Wirkung von Luftsauerstoff hinzu, wozu zu bemerken ist, daß z.B. Molybdän oder Wolfram oberhalb von etwa 550°C bis 600°C stark oxidieren.

Durch die EP 0 372 111 B1 ist es bekannt, am ofeninneren Ende eines rohrförmigen Elektrodenhalters mit einem koaxialen Wasserführungsrohr ein Innengewinde für das Einschrauben der Aussengewinde von Elektroden und Elektrodenabschnitten aus hochhitzebeständigen Metallen wie Molybdän, Platin, Wolfram oder deren Legierungen vorzusehen. Die Elektroden sind dabei mit koaxialen Bohrungen versehen, in die das Ende des Wasserführungsrohres hinein ragt. Durch Abschrauben der Elektrode kann dabei ein neuer Elektrodenabschnitt zwischengeschaltet werden, der den zunehmenden Verschleiss der bereits in Betrieb befindlichen Elektroden bzw. Abschnitte ausgleicht. Der zwischengeschaltete Elektrodenabschnitt ist jedoch kein ständig oder über längere Zeit mit dem Elektrodenhalter verbundener Adapter; er besitzt insbesondere keine Durchgangsbohrung für das Wasserführungsrohr und die Hin- und Rückführung des Kühlwassers. Er unter liegt auch in gleichem Masse dem Verschleiss wie die bereits vorher in Betrieb befindlichen Elektrodenabschnitte.

Durch die DE 195 08 433 C1 und die EP 0 799 802 B1 ist es bekannt, am ofeninneren Ende eines rohrförmigen Elektrodenhalters mittels zweier auf dem Umfang verschraubter Flanschverbindungen ein komplexes Verbindungsgehäuse anzuordnen. Zwischen den Ringflanschen der untersten Flanschverbindung sind ein Kupplungsstück und ein Stützring eingespannt. Das Kupplungsstück besteht aus einem scheibenförmigen Teil und zwei koaxialen Fortsätzen mit Aussengewinden, von denen das obere zum Aufschrauben einer flexiblen Wasser- und Stromleitung und das untere zum Aufschrauben der Elektrode dient. Der Stützring besitzt eine innere Konusfläche für die Kontaktierung der Elektrode und ist mit einem System von Kühlkanälen versehen, die mit Anschlusskanälen im Kupplungsstück kommunizieren. Zum Austausch von Kupplungsstück und Stützring für ein anders geformtes oberes Elektrodenende muss der gesamte untere Teil des Verbindungsgehäuses zerlegt werden. Herstellung und Umrüstung sind daher sehr material- und kostenintensive Vorgänge.

Die früheren Top-Elektroden hatten meist einen Durchmesser von 63 mm. Im Laufe der Zeit wurde zwecks Leistungserhöhung der Durchmesser der Heizelektroden auf beispielsweise 88,90 mm (= 3,5 Zoll) gesteigert. Dies bedeutet eine enorme Gewichtsbelastung für den Elektrodenhalter. Selbst bei normal betriebenen Elektroden mit 63 mm Durchmesser konnte bei hohen Strombelastungen ein Verschleiss im übergangsbereich von Molybdän zu Kupfer im Elektrodenhalter festgestellt werden. Dann hat es sich nicht als durchführbar erwiesen, eine 88,90 mm-Elektrode im übergangsbereich zum Elektrodenhalter auf 40 mm abzudrehen.

Eine Vergrösserung des Durchmessers des Elektrodenhalters ist jedoch sehr kostenaufwändig und erschwert den Transport, die Montage, den Betrieb und die Wartung. Bei vielen Top-Elektroden wurde auch beobachtet, dass der übergangsbereich Stahl/Molybdän von aussen her stark verzundert. Dies bedeutet, dass der Elektrodenhalter nachgearbeitet werden muss, was in vielen Fällen nicht mehr möglich ist.

Der Erfindung liegt daher die Aufgabe zugrunde, bei dem eingangs beschriebenen Elektrodensystemen die Kompatibilität, Flexibilität sowie die Nach- und Umrüstbarkeit von Elektrodenhaltern und Heizelektroden zu vereinfachen und kostengünstiger zu gestalten.

Die Lösung der gestellten Aufgabe erfolgt bei dem eingangs angegebenen Elektrodensystem erfindungsgemäss dadurch dass
a) die Kupplungseinrichtung eine erste tragfähige, lösbare Schraubverbindung mit einem koaxialen Aussengewinde für das Einschrauben in den Elektrodenhalter und eine zweite tragfähige lösbare Schraubverbindung mit einem koaxialen Innengewinde für das Einschrauben der Heizelektrode aufweist, und dass
b) die Kühlmittelführung aus einem Rohr und einem dieses umgebenden Ringspalt besteht, die beide durch die Gewindeverbindungen und durch die Kupplungseinrichtung hindurch geführt sind.

Hierdurch wird die gestellte Aufgabe in vollem Umfange gelöst, d.h. die Kompatibilität, Flexibilität sowie die Nach- und Umrüstbarkeit von Elektrodenhaltern und Heizelektroden mit unterschiedlichen Gewindeverbindungen werden vereinfacht und bei hoher mechanischer Belastung kostengünstiger gestaltet. Der Kostenunterschied zwischen dem alten und dem neuen Elektrodensystem bedeutet, dass der Betreiber ohne weiteres die Verbindung zwischen Elektrodenhalter und Heizelektrode ändern und frei wählen kann. Auch der Werkstoff für die Heizelektroden ist frei wählbar und nicht auf Molybdän beschränkt.

Sofern dabei die Kupplungseinrichtung mit ihren Schraubverbindungen aus einem gut leitfähigen Kernteil aus Kupfer oder einer Kupfer-Legierung wie Messing besteht und von einem Mantel aus chemisch und thermisch resistenten Werkstoff wie Edelstahl umgeben ist, besteht ein wirkungsvoller Schutz gegen chemische und thermische Einflüsse, wie sie in einer Ofenatmospäre bei hohen Temperaturen von 1400 °C und darüber gegeben sind.

Es ist im Zuge weiterer Ausgestaltungen der Erfindung besonders vorteilhaft, wenn - entweder einzeln oder in Kombination - :
* die Kupplungseinrichtung zur Stromleitung ein Kernteil aus einem kupferhaltigen Werkstoff mit einem Fortsatz für das Einschrauben in den Elektrodenhalter und das koaxiale Innengewinde für das Einschrauben der Heizelektrode und ein Muffenteil besitzt, das auf seiner Aussenseite mindestens teilweise von einem Mantel aus einem hitzebeständigen, oxidations- und korrosionsfesten Werkstoff umgeben ist,
* der Mantel gegenüber der Heizelektrode nach unten hin durch eine an den Mantel angeschweisste Ringscheibe aus einem hitzebeständigen, oxidations- und korrosionsfesten Werkstoff abgeschlossen ist,
* der Mantel gegenüber dem Elektrodenhalter nach oben hin durch eine an den Elektrodenhalter angeschweisste Ringscheibe aus einem hitzebeständigen, oxidations- und korrosionsfesten Werkstoff abgeschlossen ist,
* das Muffenteil allseits von Mantelteilen eingeschlossen ist,
* das Kernteil aus einer Messinglegierung besteht,
* die Mantelteile des Muffenteils aus jeweils einer Edelstahllegierung bestehen,
* der Mantel im Bereich seiner Oberkante Ausnehmungen für das Ansetzen eines Werkzeugs besitzt, und/oder, wenn.
* der Fortsatz der Heizelektrode gegenüber der Kupplungseinrichtung durch eine Ringdichtung abgedichtet ist.

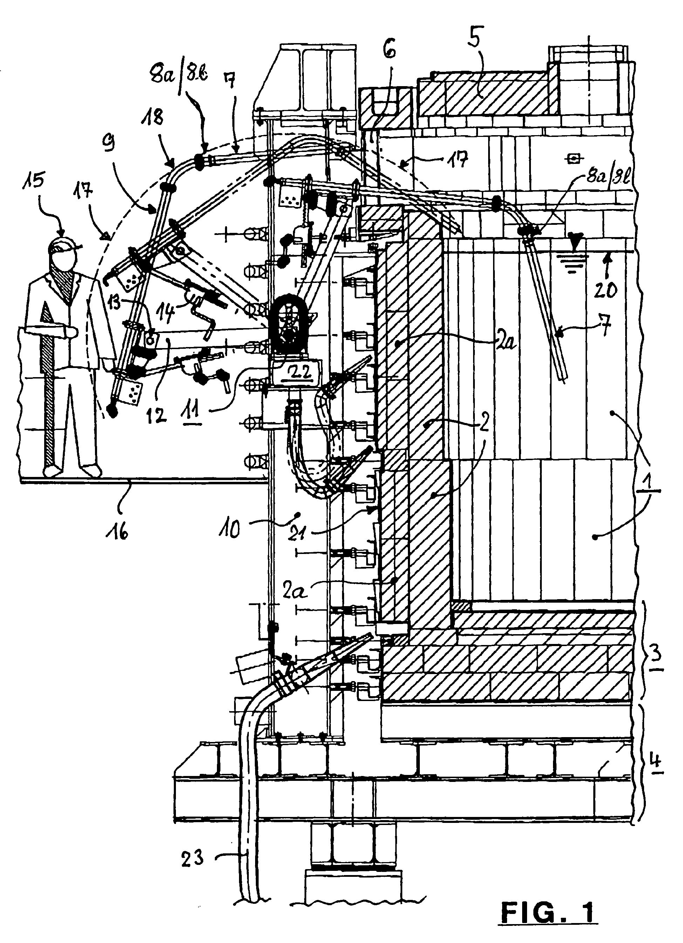

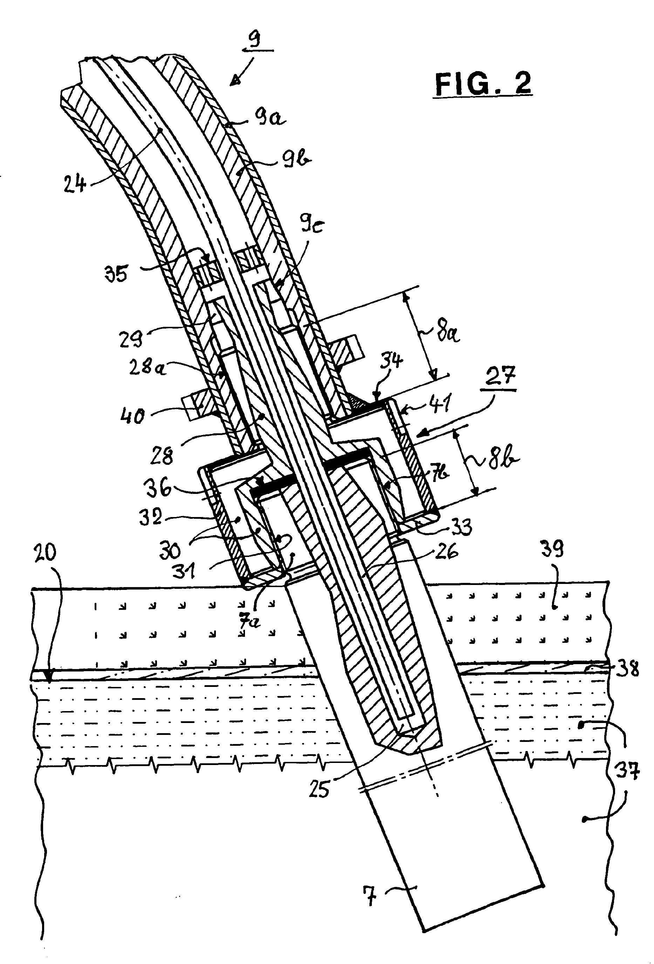

Ein Ausführungsbeispiel des Erfindungsgegenstandes und dessen Wirkungsweise und Vorteile werden nachfolgend anhand der Figuren 1 und 2 näher erläutert.

Es zeigen:
- Figur 1: einen teilweisen Vertikalschnitt durch einen Glas-Schmelzofen und eine Seitenansicht des Elektroden-Schwenksystems und
- Figur 2: einen teilweisen Vertikalschnitt durch die Gewindeverbindungen von Elektrodenhalter und Heizelektrode.

Die Figur 1 zeigt einen relevanten Ausschnitt aus einer Schmelzwanne 1 mit einem senkrechten Wannenrand 2 und einem waagrechten Wannenboden 3, der auf einem Traggerüst 4 aus Doppel-T-Profilen ruht. über der Schmelzwanne 1 befindet sich ein Ofendeckel 5. Zwischen diesem und dem Wannenrand 2 befindet sich mindestens ein Fenster 6 für das Ein-und Ausschwenken jeweils einer Heizelektrode 7, die über Schraubverbindungen 8a und 8b mit einem Elektrodenhalter 9 verbunden ist. Einzelheiten dieser Schraubverbindungen 8a und 8b sind in Figur 2 im Detail dargestellt.

Ausserhalb der Schmelzwanne 1 befindet sich - auf dem Traggerüst 4 befestigt - eine senkrechte Tragsäule 10, an der ein Schwenkgelenk 11 befestigt ist, um das ein Schwenkhebel 12 mit einem weiteren Gelenk 13 schwenkbar ist. Die relative Winkelstellung und damit die Eintauchtiefe der Heizelektrode 7 ist durch einen Kurbeltrieb 14 einstellbar. Die Schwenkbewegung wird durch eine Bedienungsperson 15 herbeigeführt, die auf einer Arbeitsplattform 16 steht. Die Schwenkbahn 17 des am weitesten aussen liegenden Punktes eines Kniestücks 18 innerhalb des Elektrodenhalters 9 ist durch einen gestrichelten Kreisbogen angedeutet, der Schmelzenspiegel 20 durch eine Linie.

Der Wannenrand 2 ist unter Einschluss einer Wärmedämmung 2a aussen von einem Metallmantel 21 umgeben, auf den mehrere, nicht näher bezeichnete Kühldüsen ausgerichtet sind, die an Versorgungskanäle 22 und 23 angeschlossen sind. Es ist erkennbar, dass die Heizelektrode 7 bei voll ausgeschwenktem Elektrodenhalter 9 von aussen auswechselbar ist.

Die Figur 2 zeigt das ofeninnere Ende des Elektrodenhalters 9, der ein Aussenrohr 9a aus einem gegen Hitze, chemische und mechanische Einflüsse resistenten Material wie Edelstahl aufweist und ein Innenrohr 9b aus einem Strom gut leitenden Werkstoff wie Kupfer. Das Innenrohr 9b besitzt an seinem unteren Ende ein Innengewinde und eine Kegelfläche 9c. Im Innern des Elektrodenhalters 9 befindet sich eine Kühlmittelführung 24 in Form eines Rohres, dessen Ende merklich über das Ende des Elektrodenhalters 9 vorsteht und in einen Hohlraum 25 der Heizelektrode 7 hineinragt. Dadurch wird ein Kühlmittel wie beispielsweise Wasser in das obere Ende der Heizelektrode 7 eingeleitet und über einen Ringspalt 26 wieder in den Elektrodenhalter 9 zurückgeführt.

Zwischen der Heizelektrode 7 und dem Elektrodenhalter 9 befindet sich eine gut Strom leitende Kupplungseinrichtung 27, die einen einstückig angeformten Fortsatz 28 mit einem Aussengewinde 28a und einem kegelförmigen Ende 29 aufweist, das in die hierzu komplementäre Kegelfläche 9c des Innenrohres 9b mit hohem Anpressdruck und Strom übertragend eingreift. Hierdurch wird die erste Schraubverbindung 8a hergestellt. Ferner besitzt die Kupplungseinrichtung 27 ein Muffenteil 30 mit einem konzentrischen Innengewinde 31 wählbaren Durchmessers. Das Muffenteil 30, dessen Kern aus Kupfer oder einer kupferhaltigen Legierung besteht, ist mit einem Mantel 32 aus einem gegen chemische Angriffe resistenten Werkstoff wie beispielsweise Edelstahl überzogen, der nach unten hin zusammen mit dem Muffenteil 30 durch eine angeschweisste Ringscheibe 33 abgeschlossen ist. Das gegenüber liegende, obere Ende des Mantels 32 und das Muffenteil 30 sind von einer weiteren Ringscheibe 34 überlagert, die mit dem Aussenrohr 9a verschweisst ist.

Das obere Ende der Heizelektrode 7 besitzt einen angeformten Fortsatz 7a mit einem Aussengewinde 7b, das in das Innengewinde 31 des Muffenteils 30 eingeschraubt ist. Durch das Einschrauben werden die zweite Schraubverbindung 8b und ein weiterer guter elektrischer Kontakt hergestellt. Die Kühlmittelführung 24 ist durch eine Lochplatte 35 zentrisch im Elektrodenhalter 9 fixiert. Die radiale Abdichtung des Ringspalts 26 gegenüber der Kupplungseinrichtung 27 erfolgt durch eine Ringdichtung 36.

Der Inhalt der in Figur 1 dargestellten Schmelzwanne 1 besteht aus einer Glasschmelze 37, einer darauf schwimmenden Galleschicht 38 und einer wiederum darauf schwimmenden Gemengeschicht 39 aus den Glasrohstoffen, zu denen auch Glasbruch aus Recycling-Material gehören kann.

Zum Ansetzen eines ersten Werkzeugs ist im unteren Endbereich des Elektrodenhalters ein Ring 40 angeordnet, der eine mehrkantige Aussenseite aufweist. Zur Herstellung eines Gegendrehmoments durch ein zweites Werkzeug besitzt die Kupplungseinrichtung 27 am oberen Ende Ausnehmungen 41.

Wie ersichtlich ist, lässt sich durch Wahl und Austausch einer Kupplungseinrichtung 27 mit einem Muffenteil 30 und einem Innengewinde 31 der Elektrodenhalter 9 an unterschiedliche Durchmesser der Heizelektrode 7 anpassen. Das flüssige Kühlmittel wird durch alle Schraubverbindungen 8a und 8b hindurchgeführt, so dass diese auch nach längerem Betrieb der Heizelektrode 7 leicht lösbar bleiben.

### Bezugszeichenliste:

- 1: Schmelzwanne
- 2: Wannenrand
- 2a: Wärmedämmung
- 3: Wannenboden
- 4: Traggerüst
- 5: Ofendeckel
- 6: Fenster
- 7: Heizelektrode
- 7a: Fortsatz
- 7b: Aussengewinde
- 8a: Schraubverbindung
- 8b: Schraubverbindung
- 9: Elektrodenhalter
- 9a: Aussenrohr
- 9b: Innenrohr
- 9c: Kegelfläche
- 10: Tragsäule
- 11: Schwenkgelenk
- 12: Schwenkhebel
- 13: Gelenk
- 14: Kurbeltrieb
- 15: Bedienungsperson
- 16: Arbeitsplattform
- 17: Schwenkbahn
- 18: Kniestück
- 19: Schwenkgelenk
- 20: Schmelzenspiegel
- 21: Metallmantel
- 22: Versorgungskanal
- 23: Versorgungskanal
- 24: Kühlmittelführung
- 25: Hohlraum
- 26: Ringspalt
- 27: Kupplungseinrichtung
- 28: Fortsatz
- 28a: Aussengewinde
- 29: Ende
- 30: Muffenteil
- 31: Innengewinde
- 32: Mantel
- 33: Ringscheibe
- 34: Ringscheibe
- 35: Lochplatte
- 36: Ringdichtung
- 37: Glasschmelze
- 38: Galleschicht
- 39: Gemengeschicht
- 40: Ring
- 41: Ausnehmungen

## Patentansprüche

1. Elektrodensystem für Glas-Schmelzöfen mit einer Schmelzwanne (1) und mindestens einem über dem Schmelzenspiegel (20) angeordneten Elektrodenhalter (9) für das Einführen von Heizelektroden (7) von oben durch den Schmelzenspiegel (20) und mit je einer Kupplungseinrichtung (27) für die koaxiale, elektrische und Wasser führende Verbindung von Elektrodenhalter (9) und Heizelektrode (7), wobei der Elektrodenhalter (9) eine Kühlmittelführung (24) für ein Kühlmittel besitzt, die bis in die Heizelektrode (7) hineinreicht, **dadurch gekennzeichnet, dass**
a) die Kupplungseinrichtung (27) eine erste tragfähige, lösbare Schraubverbindung (8a) mit einem koaxialen Aussengewinde (28a) für das Einschrauben in den Elektrodenhalter (9) und eine zweite tragfähige lösbare Schraubverbindung (8b) mit einem koaxialen Innengewinde (31) für das Einschrauben der Heizelektrode (7) aufweist, und dass
b) die Kühlmittelführung (24) aus einem Rohr und einem dieses umgebenden Ringspalt (26) besteht, die beide durch die Gewindeverbindungen (8a, 8b) und durch die Kupplungseinrichtung (27) hindurch geführt sind.

2. Elektrodensystem nach Anspruch 1, **dadurch gekennzeichnet, dass** die Kupplungseinrichtung (27) zur Stromleitung ein Kernteil aus einem kupferhaltigen Werkstoff mit einem Fortsatz (28) für das Einschrauben in den Elektrodenhalter (9) und das koaxiale Innengewinde (31) für das Einschrauben der Heizelektrode (7) und ein Muffenteil (30) besitzt, das auf seiner Aussenseite mindestens teilweise von einem Mantel (32) aus einem hitzebeständigen, oxidations- und korrosionsfesten Werkstoff umgeben ist.

3. Elektrodensystem mit Kupplungseinrichtung nach Anspruch 2, **dadurch gekennzeichnet, dass** der Mantel (32) gegenüber der Heizelektrode (7) nach unten hin durch eine an den Mantel (32) angeschweisste Ringscheibe (33) aus einem hitzebeständigen, oxidations- und korrosionsfesten Werkstoff abgeschlossen ist.

4. Elektrodensystem mit Kupplungseinrichtung nach Anspruch 2, **dadurch gekennzeichnet, dass** der Mantel (32) gegenüber dem Elektrodenhalter (9) nach oben hin durch eine an den Elektrodenhalter (9) angeschweisste Ringscheibe (34) aus einem hitzebeständigen, oxidations- und korrosionsfesten Werkstoff abgeschlossen ist.

5. Elektrodensystem mit Kupplungseinrichtung nach Anspruch 2, **dadurch gekennzeichnet, dass** das Muffenteil (30) allseits von Mantelteilen (32/33/34) eingeschlossen ist.

6. Elektrodensystem mit Kupplungseinrichtung nach Anspruch 2, **dadurch gekennzeichnet, dass** das Kernteil aus einer Messinglegierung besteht.

7. Elektrodensystem mit Kupplungseinrichtung nach Anspruch 5, **dadurch gekennzeichnet, dass** die Mantelteile (32/33/34) des Muffenteils (30) aus jeweils einer Edelstahllegierung bestehen .

8. Elektrodensystem mit Kupplungseinrichtung nach Anspruch 2, **dadurch gekennzeichnet, dass** der Mantel (32) im Bereich seiner Oberkante Ausnehmungen (41) für das Ansetzen eines Werkzeugs besitzt.

9. Elektrodensystem mit Kupplungseinrichtung nach Anspruch 2, **dadurch gekennzeichnet, dass** der Fortsatz (7a) der Heizelektrode (7) gegenüber der Kupplungseinrichtung (27) durch eine Ringdichtung (36) abgedichtet ist.
